# EUROPÄISCHE PATENTANMELDUNG

(11) **EP 1 020 377 A1**
(43) Veröffentlichungstag der Anmeldung: **19.07.2000**
(21) Anmeldenummer: 97109964.3
(22) Anmeldetag: 18.06.1997
(51) Int. Cl.: B65G 13/07, B65G 13/08

(54) **Bogenförmige Rollenbahn mit konischen Rollen, die über einen Riementrieb miteinander verbunden sind**

(71) Anmelder: Kettner GmbH, 83026 Rosenheim (DE)
(72) Erfinder: Inninger, Günther, 85748 Garching (DE)

(57) **Zusammenfassung**

Zum Kurvenfördern werden Konische Förderrollen (2) jeweils durch Zahnriemen (9a,9b) angetrieben. Die Förderrollen (2) stehen mit den jeweils benachbarten Förderrollen (2) über Zahnriemen (9a,9b) und eine dazwischenliegende Umlenkrolle (4) in Verbindung.

## Beschreibung

Die Erfindung betrifft eine Vorrichtung zum Fördern von Gegenständen um eine Kurve mit Hilfe von konischen Förderrollen.

Bei bekannten Vorrichtungen weisen die konischen Földerrollen jeweils ein Zahnrad auf, in welches eine gemeinsame Kette eingreift. Diese Kette muß nun ebenfalls um die Kurve verlaufen und somit eine Bewegung ausführen die nicht optimal für den Einsatz einer Kette ist. Dies hat nachteilig zur Folge, daß die von der Kette auf die Förderrollen übertragbare Kraft und somit auch die maximale Fördergeschwindigkeit begrenzt ist. Als zusätzlicher Nachteil tritt hoher Verschleiß an den Ketten und Zahnrädern auf.

Es ist daher Aufgabe der Erfindung eine Vorrichtung zum Fördern von Gegenständen zu schaffen welche die Nachteile des Standes der Technik überwindet und insbesondere beim Fördern von Gegenständen um eine Kurve eine hohe Fördergeschwindigkeit und minimiertem Verschleiß ermöglicht.

Diese Aufgabe wird erfindungsgemäß gelöst durch die kennzeichnenden Merkmale des Hauptanspruchs. Die Unteransprüche betreffen Weiterbildungen und/oder besonders vorteilhafte Ausgestaltungen der Erfindung.

Nachfolgend wird ein mögliches Ausführungsbeispiel der Erfindung anhand der Bezugszeichenliste und der Zeichnungen näher erläutert.

Es zeigen im einzelnen:
- Fig.1: in Draufsicht einen Ausschnitt einer gekrümmten Förderstrecke
- Fig.2: in schematisierter Seitenansicht den aus Fig. 1 bekannten Ausschnitt der Förderstrecke
- Fig. 3: das Zusammenwirken der einzelnen Antriebsrollen

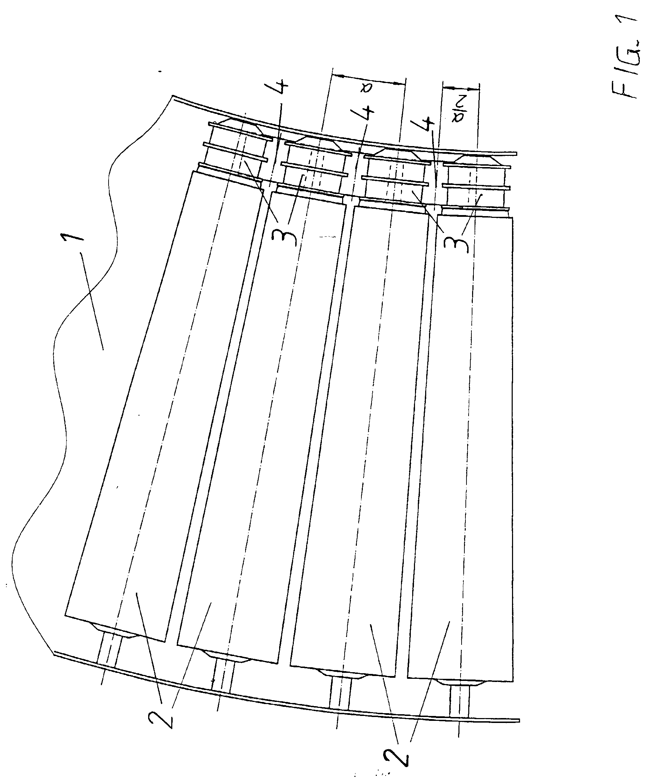

Figur 1 zeigt eine Förderstrecke 1 bestehend aus mehreren konischen Förderrollen 2. An den verjüngten Enden der Förderrollen 2 befinden sich jeweils zwei fest mit der Förderrolle 2 verbundene Riemenscheiben 3. Mittig zwischen jeweils zwei Förderrollen 2, jedoch auf einem Niveau unterhalb der Förderrollen 2 befindet sich jeweils eine Umlenkrolle 4. In der gewählten Ansicht ist die Umlenkrolle 4 nur sehr undeutlich sichtbar, die genaue Lage ist in den anderen Ansichten jedoch klar sichtbar. Aufgrund der Krümmung der Förderstrecke 1 stehen die Achsen jeweils benachbarter konischer Förderrollen 2 in einem Winkel alpha zueinander. Die Achse der Umlenkrolle 4 und die Achsen der jeweils benachbarten Förderrollen 2 sind zueinander nur um einen Winkelbetrag von alpha/2 verschränkt.

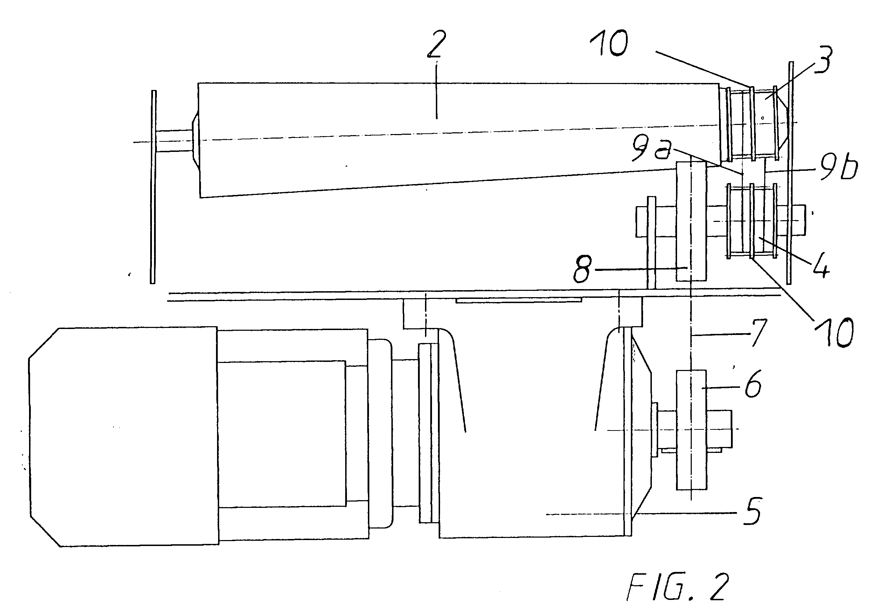

Figur 2 zeigt eine Seitenansicht der Forderstrecke. Neben den aus Figur 1 schon bekannten Elementen ist ein stilisierter Antriebsmotor 5 gezeigt, der über eine Abtriebsrolle 6, einen Riemen 7 und das Antriebsrad 8 eine der Umlenkrollen 4 antreibt. Diese wiederum treibt mittels eines weiteren Riemens 9a, der über die Riemenscheibe 3 verläuft die Förderrolle 2 an. In dieser Ansicht erkennt man, daß sowohl die Riemenscheibe 3, als auch die Umlenkrolle 4 speziell ausgelegt sind, um jeweils mit zwei Riemen zusammenwirken zu können.

Die Riemenscheiben 3 und die Umlenkrollen 4 haben Stege 10, welche die Riemen 9a bzw 9b gegen seitliche Bewegung auf der Riemenscheibe 3 bzw der Umlenkrolle 4 abstützen.

Dementsprechend ist auf der Umlenkrolle 4 noch ein zweiter Riemen 9b angebracht, der eine in dieser Darstellung verdeckte Förderrolle antreibt. Alle Einzelteile befinden sich in einem Gestell. Die Umlenkrollen 4 sind unterhalb der durch die waagrechte Transportebene angeordnet. Um mit den konischen Transportrollen eine waagrechte Transportebene zu realisieren muß die Achse schräg verlaufend angeordnet sein.
Gegenüber den Achsen der Umlenkrollen 4 sind die Achsen der benachbarten Riemenscheiben 3 somit zweifach versetzt. Einmal in X-Richtung um den Winkel alpha/2 und in Y-Richtung um den Ausgleichswinkel, der notwendig ist mit konischen Transportrollen die waagrechte Transportebene zu erzeugen.

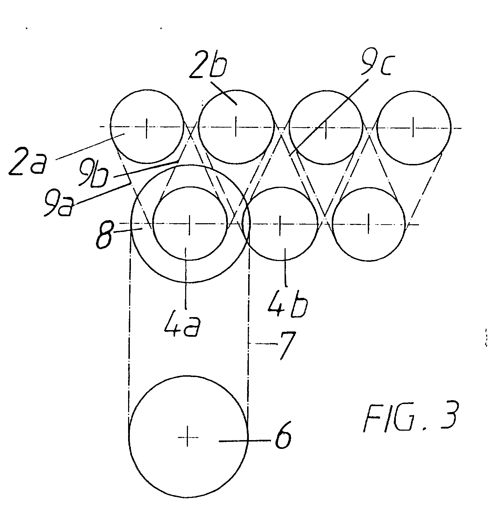

Figur 3 zeigt in schematischer Darstellung das Zusammenwirken der einzelnen Antriebsrollen, Riemen, Riemenscheiben und Umlenkrollen. Die Antriebsrolle 6 dreht sich entgegen dem Uhrzeigersinn und überträgt diese Drehung über den Riemen 7 auf das Antriebsrad 8 und die Umlenkrolle 4a. Von dort aus treibt der Riemen 9a die Transportrolle 2a an. Über den Riemen 9b wird die Transportrolle 2b angetrieben, welche ihrerseits wieder über den Riemen 9c die Umlenkrolle 4b in Bewegung versetzt.

Dieses Prinzip, unter Zuhilfenahme der Umlenkrolle 4 jeweils die benachbarte Transportrolle 2 anzutreiben ist beliebig erweiterbar.

### Bezugszeichenliste

- 1: Förderstrecke
- 2: Förderrollen
- 3: Riemenscheibe
- 4: Umlenkrolle
- 5: Antriebsmotor
- 6: Abtriebsrolle
- 7: Riemen
- 8: Antriebsrad
- 9: Riemen
- 10: Steg

## Patentansprüche

1. Vorrichtung zum Fördern von Gegenständen um eine Kurve mit
- einer Vielzahl von konischen Förderrollen welche eine Förderebene bilden und deren Achsen um einen Winkel W zueinander versetzt verlaufen,
- einem Gestell, in welchem die Förderrollen gelagert sind
- einem Antriebsmotor, durch welchen die Förderrollen in Rotation versetzbar sind
- einem an jeder Förderrolle befestigten Antriebsrad und
- mindestens einem Zugmittel, durch welche die Antriebsräder untereinander und mit dem Antriebsmotor in Wirkverbindung stehen
**dadurch gekennzeichnet, daß**
- jede Förderrolle (2) über ein erstes Zugmittel (9a), das vom Antriebsrad (3) der Förderrolle (2a) zu einer Umlenkrollen (4) führt und einem zweiten Zugmittel (9b), das von der Umlenkrolle (4) zum Antriebsrad (3) einer benachbarten Förderrolle (2b) führt, mit ihrer jeweils benachbarten Förderrolle (2b) in Wirkverbindung steht.

2. Vorrichtung nach Anspruch 1
**dadurch gekennzeichnet, daß**
- die Umlenkrolle (4) unterhalb der Förderebene an dem Gestell anbrach ist und
- die Achse der Umlenkrolle und die Achse der zur Umlenkrolle benachbarten Förderrolle um einen Winkel W/2 versetzt verlaufen

3. Vorrichtung nach Anspruch 1 oder 2,
**dadurch gekennzeichnet, daß**
- die Zugmittel (9a, 9b) als Zahnriemen ausgestaltet sind.

4. Vorrichtung nach Anspruch 1 oder 2,
**dadurch gekennzeichnet, daß**
- das Antriebsrad (3) und/oder die Umlenkrolle (4) Stege aufweisen, welche die Zugmittel (9a, 9b) gegen seitliche Bewegung abstützen.
